# EUROPÄISCHE PATENTSCHRIFT

(11) **EP 3 919 777 B1**
(45) Veröffentlichungstag und Bekanntmachung des Hinweises auf die Patenterteilung: **29.11.2023**
(21) Anmeldenummer: 21174071.7
(22) Anmeldetag: 17.05.2021
(51) Int. Cl.: F16H 3/10, B60K 1/00, F16H 3/089

(54) **ANTRIEBSEINHEIT**
DRIVE UNIT
UNITÉ D'ENTRAÎNEMENT

(30) Priorität: 02.06.2020 DE 102020206855
(43) Veröffentlichungstag der Anmeldung: 08.12.2021
(73) Patentinhaber: Robert Bosch GmbH, 70442 Stuttgart (DE)
(72) Erfinder: Schlittenbauer, Tobias, 71679 Asperg (DE); Jung, Philipp, 74321 Bietigheim-Bissingen (DE)

(56) Entgegenhaltungen:
- WO-A1-2020/083723
- CN-A- 109 591 576
- DE-A1-102012 213 859
- DE-A1-102014 118 591
- DE-U1-202005 019 438
- KR-A- 20130 013 283
- US-A1- 2018 201 127
- US-A1- 2019 351 762

## Beschreibung

### Stand der Technik

Die Erfindung betrifft eine Antriebseinheit für ein Fahrzeug nach dem Oberbegriff des Anspruchs 1.

Eine Antriebseinrichtung für ein Kraftfahrzeug ist aus DE 10 2017 006 807 A1 bekannt. Die Antriebseinrichtung weist eine elektrische Maschine, eine Getriebeeinrichtung und ein Differential auf, von dem Seitenwellen ausgehen. Welche Antriebsanforderungen die Antriebseinrichtung abdecken kann, hängt wesentlich von der Auslegung der elektrischen Maschine ab.

Die US 2019/351762 A1 offenbart ein Antriebseinheit mit den Merkmalen des Oberbegriffs des Anspruchs 1. Weitere Antriebseinheiten sind aus der DE 10 2012 213 859 A1 bekannt.

### Offenbarung der Erfindung

Das der Erfindung zugrunde liegende Problem wird durch eine Antriebseinheit mit den Merkmalen des Anspruchs 1 gelöst. Vorteilhafte Weiterbildungen der Erfindung sind in den Unteransprüchen genannt.

Erfindungsgemäß wird eine Antriebseinheit vorgeschlagen, die eine elektrische Maschine, ein Getriebe und ein Differential aufweist. Die elektrische Maschine ist mittels des Getriebes mit dem Differential gekoppelt, so dass die elektrische Maschine über das (zwischengeschaltete) Getriebe das Differential antreiben kann. Die elektrische Maschine weist eine Rotorwelle auf, die als Hohlwelle ausgebildet ist. Das Differential ist (ausgangsseitig) mit zwei Achsseitenwellen gekoppelt, wobei eine der Achsseitenwellen durch die Hohlwelle hindurch geführt ist. Diese Achsseitenwelle und die Hohlwelle können ggf. koaxial zueinander angeordnet sein. Das Getriebe ist als Getriebe mit zwei Schaltstufen (2-Gang-Getriebe) mit einer Zwischenwelle (Vorgelegewelle) ausgebildet, wobei das Getriebe eine erste Schaltstufe aufweist, die ein auf der Hohlwelle angeordnetes und drehfest mit der Hohlwelle gekoppeltes erstes Ritzel und ein auf der Zwischenwelle angeordnetes erstes Zahnrad aufweist, wobei das erste Zahnrad mit dem ersten Ritzel kämmt und drehbar an der Zwischenwelle gelagert ist, wobei eine erste Kupplungseinrichtung vorgesehen ist, mittels der das erste Zahnrad und die Zwischenwelle drehfest koppelbar sind, wobei das Getriebe eine zweite Schaltstufe aufweist, die ein auf der Hohlwelle angeordnetes zweites Ritzel und ein auf der Zwischenwelle angeordnetes zweites Zahnrad aufweist, wobei das zweite Ritzel und das zweite Zahnrad miteinander kämmen und wobei eine zweite Kupplungseinrichtung vorgesehen ist. Erfindungsgemäß ist mittels der zweiten Kupplungseinrichtung das zweite Ritzel mit der Hohlwelle drehfest koppelbar.

Hiermit ist eine Ausgestaltung mit vergleichsweise kompaktem Bauraum begünstigt, da zwei Gänge einen kleineren Motor zur Abdeckung der Antriebsanforderungen erlauben. Es kann eine höhere Effizienz erreicht werden, da der Motor häufiger im Bereich höheren Wirkungsgrades betrieben werden kann.

Die Antriebseinheit kann als elektrische Antriebseinheit für ein Fahrzeug dienen, bspw. in Form einer elektrischen Achse ("E-Achse"). Auch eine Anwendung im Maschinenbau ist denkbar, bspw. als Antriebseinheit für eine Werkzeugmaschine.

Die elektrische Maschine kann einen Rotor aufweisen, der auf der Rotorwelle angeordnet und drehfest mit der Rotorwelle gekoppelt ist. Die elektrische Maschine kann zudem einen Stator aufweisen, der mit dem Rotor elektromagnetisch zusammenwirkt. Die elektrische Maschine und/oder das Getriebe können jeweils ein Gehäuse aufweisen, in dem Komponenten von elektrische Maschine und/oder Getriebe ganz oder teilweise angeordnet sind.

Zur Aktuierung der Schaltelemente (Lamellenkupplung und/oder Klauenkupplung) können an Kupplungseinrichtungen (Schaltelemente) jeweils eine hydraulische, elektromotorische oder magnetische Betätigungseinrichtung vorgesehen sein. Mittels den Betätigungseinrichtungen können die Kupplungseinrichtungen betätigt werden, bspw. in eine geschlossene Stellung und in eine geöffnete Stellung verbracht werden.

Die Zwischenwelle verbindet die elektrische Maschine und das Differential triebtechnisch miteinander. Die Zwischenwelle kann seitlich versetzt zur Hohlwelle angeordnet sein. Die Mittellängsrichtung der Zwischenwelle und die Mittellängsrichtung der Hohlwelle können parallel orientiert sein. Das Differential teilt die Leistung auf die beiden Achsseitenwellen auf.

Dadurch, dass das Getriebe eine erste Schaltstufe aufweisen, die ein auf der Hohlwelle angeordnetes und drehfest mit der Hohlwelle gekoppeltes erstes Ritzel und ein auf der Zwischenwelle angeordnetes erstes Zahnrad aufweist, wobei das erste Zahnrad mit dem ersten Ritzel kämmt und drehbar an der Zwischenwelle gelagert ist, wobei eine erste Kupplungseinrichtung vorgesehen ist, mittels der das erste Zahnrad und die Zwischenwelle drehfest miteinander koppelbar sind, ist eine regelbare Drehmomentübertragung von der Hohlwelle auf die Zwischenwelle möglich. Die Kupplungseinrichtung kann in eine geöffnete und eine geschlossene Stellung gebracht werden. Ist die Kupplungseinrichtung geschlossen, kann eine Drehmomentübertragung von der Hohlwelle auf die Zwischenwelle erfolgen (erstes Zahnrad und Zwischenwelle sind drehfest miteinander gekoppelt). Ist die Kupplungseinrichtung geöffnet, kann mittels der ersten Schaltstufe keine Drehmomentübertragung vom ersten Zahnrad auf die Zwischenwelle erfolgen. Das Getriebe weist eine zweite Schaltstufe auf, die ein auf der Hohlwelle angeordnetes zweites Ritzel und ein auf der Zwischenwelle angeordnetes zweites Zahnrad aufweist, wobei das zweite Ritzel und das zweite Zahnrad miteinander kämmen, wobei eine zweite Kupplungseinrichtung vorgesehen ist, mittels der das zweite Ritzel mit der Hohlwelle drehfest koppelbar ist. Dadurch kann mit einfachen konstruktiven Mitteln eine zweite Schaltstufe bereitgestellt werden. Die Kupplungseinrichtung sitzt je nach Ausgestaltung zwischen den zu kuppelnden Elementen. Die zweite Kupplungseinrichtung kann eine Lamellenkupplung aufweisen. Die jeweils andere Komponente von zweitem Ritzel und zweitem Zahnrad (das jeweils nicht mit der Kupplung drehfest koppelbare Element) ist drehfest auf der jeweiligen Welle angeordnet bzw. bereits drehfest mit der jeweiligen Welle gekoppelt.

Das zweite Ritzel ist drehbar auf der Hohlwelle gelagert, wobei die zweite Kupplungseinrichtung zwischen Hohlwelle und zweitem Ritzel angeordnet ist bzw. wirkt, so dass das zweite Ritzel (bei geschlossener zweiter Kupplungseinrichtung) drehfest mit der Hohlwelle koppelbar ist. Das zweite Zahnrad ist drehfest auf der Zwischenwelle angeordnet. Dies vereinfacht die Ausgestaltung bzw. Anordnung der Komponenten auf der Zwischenwelle.

Gemäß einer Weiterbildung kann die erste Kupplungseinrichtung einen Freilauf oder einen Freilauf mit einer Klauenkupplung oder eine Lamellenkupplung aufweisen. Hiermit ist mit einfachen konstruktiven Mitteln eine regelbare Drehmomentübertragung möglich.

Der Freilauf (Überholkupplung) ist eine in einer Drehrichtung wirkende Kupplung. Der Freilauf ist derart ausgelegt, dass er im Vorwärts-Zugbetrieb (Drehmomentübertragung von der elektrischen Maschine in Richtung Differential) greift bzw. wirkt. Eine Drehmomentübertragung von der Hohlwelle auf die Zwischenwelle erfolgt dann, wenn die Drehzahl des ersten Zahnrades größer ist als die Drehzahl der Zwischenwelle. Bei Drehrichtungsumkehr oder wenn die Drehzahl der Zwischenwelle größer ist als die des Zahnrades, wird die Verbindung selbsttätig gelöst (keine Drehmomentübertragung von Hohlwelle auf Zwischenwelle). Hierbei handelt es sich um eine konstruktiv besonders einfache Ausgestaltung.

Ist der Freilauf zusätzlich mit einer Klauenkupplung ausgestattet, kann (bei geschlossener Klauenkupplung) drehrichtungsunabhängig eine formschlüssige Verbindung zwischen dem ersten Zahnrad und der Zwischenwelle hergestellt werden. Somit kann (bei geschlossener Klauenskupplung) in der ersten Schaltstufe rekuperiert werden (Kraftflussumkehr) oder es kann rückwärts gefahren werden. Dies erhöht die Flexibilität im Betrieb. Zudem ist hiermit eine besonders reibungsarme Ausgestaltung möglich.

Weist die Kupplung eine Lamellenkupplung auf, können das Zahnrad und die Zwischenwelle mittels lediglich einer Komponente drehfest miteinander gekoppelt werden. Dies reduziert die Anzahl der Komponenten und den konstruktiven Aufwand. Eine platzsparende Ausgestaltung der Kupplungseinrichtung ist hiermit begünstigt.

Gemäß einer Weiterbildung kann, wenn sich das Getriebe in der ersten Schaltstufe befindet, in der ersten Schaltstufe die erste Kupplungseinrichtung geschlossen und die zweite Kupplungseinrichtung geöffnet sein und, wenn sich das Getriebe in der zweiten Schaltstufe befindet, kann die erste Kupplungseinrichtung geöffnet und die zweite Kupplungseinrichtung geschlossen sein. Dies erlaubt eine gezielte Wahl der beiden Schaltstufen. Zudem ermöglicht die Lastschaltbarkeit im motorischen Betrieb zugkraftunterbrechungsfreie Beschleunigung und hohen Komfort.

Gemäß einer Weiterbildung kann das Getriebe eine Parksperrenfunktion aufweisen, wozu die erste Kupplungseinrichtung und die zweite Kupplungseinrichtung geschlossen sind, so dass die Hohlwelle und die Zwischenwelle relativ zueinander drehfest blockiert sind. Dies ermöglicht die Bereitstellung einer Parksperrenfunktion mit in der Antriebseinheit bereits vorhandenen Komponenten (Funktionsintegration). Eine Parksperreneinrichtung herkömmlicher Bauart, die ein Parksperrenrad und eine Parksperrenklinke, ggf. mit zugehöriger Mechanik und Aktuatorik, kann dadurch ersetzt werden. Dies trägt zu einer kompakten und kostengünstigen Bauweise bei.

Alternativ oder ergänzend hierzu kann zur Bereitstellung einer Parksperrenfunktion ein Parksperrenrad vorgesehen sein, welches drehfest auf der Zwischenwelle oder dem Differential angeordnet ist und mittels eines betätigbaren Blockierelements, bspw. einer Sperrklinke, welches mit dem Parksperrenrad in Eingriff bringbar ist, blockierbar ist.

Gemäß einer Weiterbildung kann auf der Zwischenwelle ein drittes Ritzel angeordnet sein, welches zum Antrieb des Differentials mit einem Zahnrad, welches auf dem Differential angeordnet ist, kämmt. Hiermit ist mit einfachen konstruktiven Mitteln eine Drehmomentübertragung von der Zwischenwelle auf das Differential möglich. Das dritte Ritzel kann drehfest an der Zwischenwelle befestigt sein. Das Zahnrad des Differentials kann drehfest am Differential angeordnet sein. Das dritte Ritzel und das Zahnrad des Differentials bilden zusammen eine Endübersetzung.

Das Getriebe ist insbesondere als Stirnradgetriebe ausgebildet (2-Gang-Stirnradgetriebe).

Nachfolgend werden mögliche Ausführungsformen der Erfindung unter Bezugnahme auf die beiliegenden Zeichnungen erläutert. Es zeigen:
Figur 1 eine erfindungsgemäße Antriebseinheit in einem schematischen Prinzipschaltbild; und
Figur 2 eine nicht von der Erfindung umfasste Antriebseinheit in einem schematischen Prinzipschaltbild, das der Erläuterung der Parksperrenfunktion mit Parksperrenrad dient.

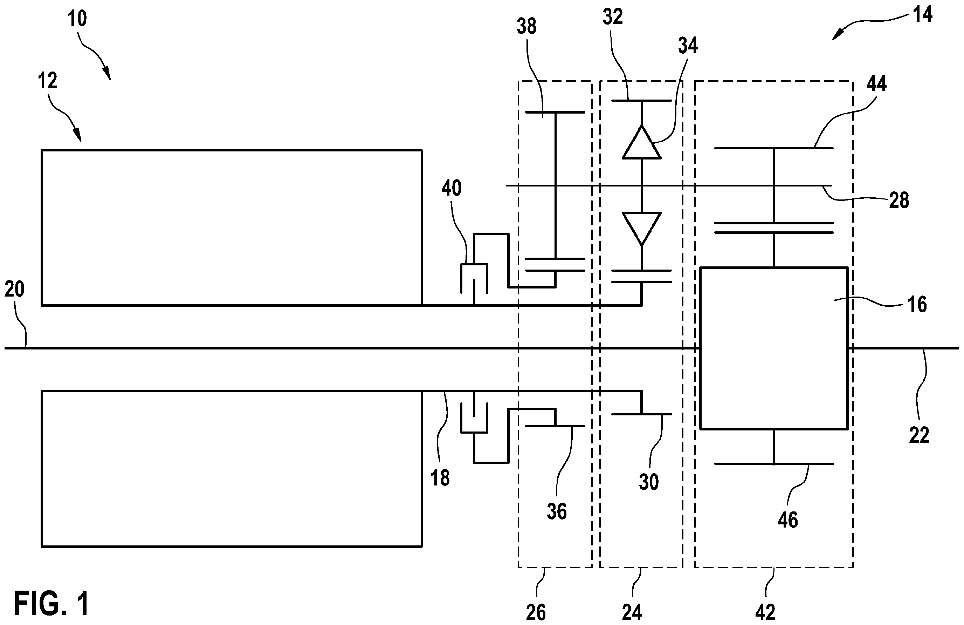

Die Antriebseinheit trägt in Figur 1 insgesamt das Bezugszeichen 10. Die Antriebseinheit 10 kann als Antriebseinheit für ein Fahrzeug dienen und bspw. als E-Achse ausgebildet sein oder Bestandteil einer E-Achse bilden.

Die Antriebseinheit 10 weist eine elektrische Maschine 12, ein Getriebe 14 und ein Differential 16 auf. Die elektrische Maschine 12 ist mittels des Getriebes 14 mit dem Differential 16 gekoppelt, so dass die elektrische Maschine 12 über das zwischengeschaltete Getriebe 14 das Differential 16 antreiben kann.

Die elektrische Maschine 12 weist eine Rotorwelle 18 auf, die als Hohlwelle 18 ausgebildet ist. Die elektrische Maschine 12 kann einen drehfest auf der Rotorwelle 18 angeordneten Rotor sowie einen Stator aufweisen, der elektromagnetisch mit dem Rotor zusammenwirkt (nicht dargestellt). Die elektrische Maschine 12 und das Getriebe 14 können jeweils ein Gehäuse aufweisen, in dem deren Komponenten ganz oder teilweise angeordnet sind (nicht gezeigt).

Das Differential 16 ist ausgangsseitig mit zwei Achsseitenwellen 20, 22 gekoppelt, wobei die Achsseitenwelle 20 durch die Hohlwelle 18 hindurch geführt ist. Das Differential 16 teilt das Drehmoment auf die Achsseitenwellen 20, 22 auf. Die Achsseitenwelle 20 und die Hohlwelle 18 können ggf. koaxial zueinander angeordent sein. Das Getriebe 14 ist als Getriebe 14 mit zwei Schaltstufen 24, 26 mit einer Zwischenwelle 28 ausgebildet.

Die Zwischenwelle 28 verbindet die elektrische Maschine 12 und das Differential 16 triebtechnisch miteinander. Die Zwischenwelle 28 ist im Beispiel seitlich versetzt zur Hohlwelle 18 angeordnet. Die Mittellängsrichtung der Zwischenwelle 28 und die Mittellängsrichtung der Hohlwelle 18 sind im Beispiel zueinander parallel orientiert.

Das Getriebe 14 weist eine erste Schaltstufe 24 auf, die ein auf der Hohlwelle 18 angeordnetes und drehfest mit der Hohlwelle 18 gekoppeltes erstes Ritzel 30 und ein auf der Zwischenwelle 28 angeordnetes erstes Zahnrad 32 aufweist, wobei das erste Zahnrad 32 mit dem ersten Ritzel 30 kämmt und drehbar an der Zwischenwelle 28 gelagert ist, wobei eine erste Kupplungseinrichtung 34 vorgesehen ist, mittels der das erste Zahnrad 32 und die Zwischenwelle 28 drehfest miteinander koppelbar sind. Die erste Kupplungseinrichtung 34 kann in eine geöffnete und eine geschlossene Stellung gebracht werden. In der geschlossenen Stellung kann eine Drehmomentübertragung von der Hohlwelle 18 auf die Zwischenwelle 28 erfolgen.

Die erste Kupplungseinrichtung 34 weist im Beispiel einen Freilauf und optional auch eine Klauenkupplung auf (nicht dargestellt). Der Freilauf (Überholkupplung) ist eine in einer Drehrichtung wirkende Kupplung. Eine Drehmomentübertragung von der Hohlwelle 18 auf die Zwischenwelle 28 kann dann erfolgen, wenn die Drehzahl des ersten Zahnrades 32 größer ist als die Drehzahl der Zwischenwelle 28. Mittels der Klauenkupplung kann (bei geschlossener Klauenkupplung) drehrichtungsunabhängig bzw. drehmomentrichtungsunabhängig eine formschlüssige Verbindung zwischen dem ersten Zahnrad 32 und der Zwischenwelle 28 hergestellt werden.

Das Getriebe 14 weist eine zweite Schaltstufe 26 auf, die ein auf der Hohlwelle 18 angeordnetes zweites Ritzel 36 und ein auf der Zwischenwelle 28 angeordnetes zweites Zahnrad 38 aufweist, wobei das zweite Ritzel 36 und das zweite Zahnrad 38 miteinander kämmen. Es ist eine zweite Kupplungseinrichtung 40 vorgesehen, mittels der das zweite Ritzel 36 mit der Hohlwelle 18 drehfest koppelbar ist. Das zweite Ritzel 36 ist drehbar auf der Hohlwelle 18 gelagert, wobei die zweite Kupplungseinrichtung 40 zwischen Hohlwelle 18 und zweitem Ritzel 36 angeordnet ist bzw. wirkt, so dass das zweite Ritzel 36 bei geschlossener Kupplungseinrichtung 40 drehfest mit der Hohlwelle 18 gekoppelt ist. Das zweite Zahnrad 38 ist drehfest auf der Zwischenwelle 28 angeordnet. Die zweite Kupplungseinrichtung 40 kann eine Lamellenkupplung aufweisen.

Befindet sich das Getriebe 14 in der ersten Schaltstufe 24 (erster Gang 24), ist die erste Kupplungseinrichtung 34 geschlossen und die zweite Kupplungseinrichtung 40 geöffnet. In der zweiten Schaltstufe 26 (zweiter Gang 26) ist die erste Kupplungseinrichtung 34 geöffnet und die zweite Kupplungseinrichtung 40 geschlossen. Zur Aktuierung der Kupplungseinrichtungen 34, 40 kann jeweils eine hydraulische, elektromotorische oder magnetische Betätigungseinrichtung vorgesehen sein, wie oben beschrieben.

Das Getriebe 14 kann eine Parksperrenfunktion aufweisen, in der die erste Kupplungseinrichtung 34 und die zweite Kupplungseinrichtung 40 geschlossen sind, so dass die Hohlwelle 18 und die Zwischenwelle 28 relativ zueinander drehfest blockiert sind. Alternativ hierzu kann zur Bereitstellung einer Parksperrenfunktion ein Parksperrenrad vorgesehen sein, wie oben beschrieben (in Figur 1 nicht dargestellt).

Am Differential 16 ist eine Endübersetzung 42 vorgesehen. Hierzu ist auf der Zwischenwelle 28 ein drittes Ritzel 44 angeordnet, welches zum Antrieb des Differentials 16 mit einem auf dem Differential 16 angeordneten Zahnrad 46 kämmt. Das dritte Ritzel 44 ist drehfest an der Zwischenwelle 28 befestigt. Das Zahnrad 46 des Differentials 16 kann drehfest am Differential 16 angeordnet sein.

Die Antriebseinheit 10 und insbesondere deren Getriebe 14 arbeiten folgendermaßen:
Beim ersten Gang 24 ist das erste Zahnrad 32 durch den Freilauf der ersten Kupplungseinrichtung 34 drehfest mit der Zwischenwelle 28 gekoppelt, während die Lamellenkupplung der zweiten Kupplungseinrichtung 40 offen bleibt. Ein durch die elektrische Maschine 12 erzeugtes Drehmoment wird somit von der Rotorwelle 18 durch das erste Ritzel 30, das erste Zahnrad 32, Kupplungseinrichtung 34, die Zwischenwelle 28, das dritte Ritzel 44 und das Zahnrad 46 bzw. die Außenverzahnung 46 des Differentials 16 zu den beiden Achsseitenwellen 20, 22 übertragen. Das Differential 16 teilt das Drehmoment auf die beiden Achsseitenwellen 20, 22 auf.

Beim zweiten Gang 26 ist die Lamellenkupplung der zweiten Kupplungseinrichtung 40 geschlossen und die Zwischenwelle 28 rotiert (bei gleichen Drehzahlen der elektrischen Maschine 12) übersetzungsbedingt schneller als im ersten Gang 24. Da die Zwischenwelle 28 mit höherer Drehzahl rotiert, ist der Freilauf der ersten Kupplungseinrichtung 34 nicht mehr im Eingriff und das erste Zahnrad 32 durch den Freilauf der ersten Kupplungseinrichtung 34 somit nicht mehr drehfest mit der Zwischenwelle 28 gekoppelt. Das durch die elektrische Maschine 12 erzeugte Drehmoment wird von der Rotorwelle 18 über die zweite Kupplungseinrichtung 40, das zweite Ritzel 36, das zweite Zahnrad 38, die Zwischenwelle 28, das dritte Ritzel 44 und das Zahnrad 46 bzw. die Außenverzahnung 46 des Differentials 16 zu den beiden Achsseitenwellen 20, 22 übertragen.

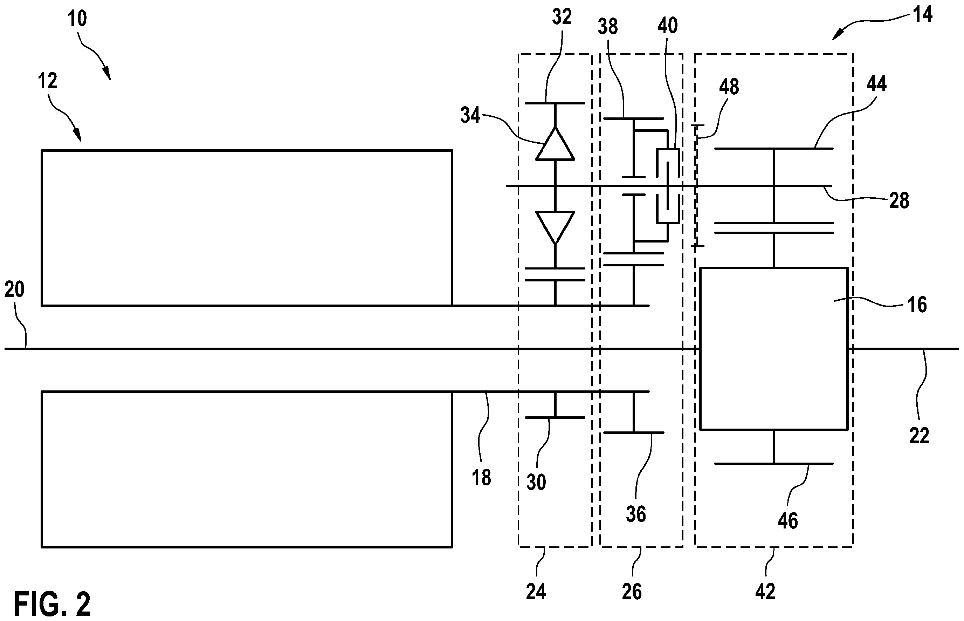

Figur 2 zeigt eine nicht erfindungsgemäße Antriebseinheit 10 mit alternativer Anordnung des zweiten Schaltelements auf der Zwischenwelle.

Die zweite Schaltstufe 26 weist ein auf der Hohlwelle 28 angeordnetes zweites Ritzel 36 und ein auf der Zwischenwelle 28 angeordnetes zweites Zahnrad 38 auf, wobei das zweite Ritzel 36 und das zweite Zahnrad 38 miteinander kämmen. Es ist eine zweite Kupplungseinrichtung 40 vorgesehen, mittels der das zweite Zahnrad 38 mit der Zwischenwelle 28 drehfest koppelbar ist.

Das zweite Zahnrad 38 ist drehbar auf der Zwischenwelle 28 gelagert, wobei die zweite Kupplungseinrichtung 40 zwischen der Zwischenwelle 28 und dem zweiten Zahnrad 38 angeordnet ist bzw. wirkt, so dass das zweite Zahnrad 38 bei geschlossener Kupplungseinrichtung 40 drehfest mit der Zwischenwelle 28 koppelbar ist. Das zweite Ritzel 36 ist drehfest auf der Hohlwelle 18 angeordnet.

Das Getriebe 14 kann auch hier eine Parksperrenfunktion aufweisen, in der die erste Kupplungseinrichtung 34 und die zweite Kupplungseinrichtung 40 geschlossen sind, so dass die Hohlwelle 18 und die Zwischenwelle 28 relativ zueinander drehfest blockiert sind.

Zur Bereitstellung einer Parksperrenfunktion kann ein Parksperrenrad 48 vorgesehen sein, welches in Figur 2 drehfest auf der Zwischenwelle 28 angeordnet ist und mittels eines betätigbaren Blockierelements blockiert werden kann, wie oben beschrieben (nicht dargestellt).

## Patentansprüche

1. Antriebseinheit (10), mit einer elektrischen Maschine (12), einem Getriebe (14) und einem Differential (16), wobei die elektrische Maschine (12) mittels des Getriebes (14) mit dem Differential (16) gekoppelt ist, so dass die elektrische Maschine (12) über das Getriebe (14) das Differential (16) antreiben kann, wobei die elektrische Maschine (12) eine Rotorwelle (18) aufweist, die als Hohlwelle (18) ausgebildet ist, wobei das Differential (16) mit zwei Achsseitenwellen (20, 22) gekoppelt ist, wobei eine der Achsseitenwellen (20, 22) durch die Hohlwelle (18) hindurch geführt ist, wobei das Getriebe (14) als 2-Gang-Getriebe (14) mit einer Zwischenwelle (28) ausgebildet ist, wobei das Getriebe (14) eine erste Schaltstufe (24) aufweist, die ein auf der Hohlwelle (18) angeordnetes und drehfest mit der Hohlwelle (18) gekoppeltes erstes Ritzel (30) und ein auf der Zwischenwelle (18) angeordnetes erstes Zahnrad (32) aufweist, wobei das erste Zahnrad (32) mit dem ersten Ritzel (30) kämmt und drehbar an der Zwischenwelle (18) gelagert ist, wobei eine erste Kupplungseinrichtung (34) vorgesehen ist, mittels der das erste Zahnrad (32) und die Zwischenwelle (28) drehfest koppelbar sind, wobei das Getriebe (14) eine zweite Schaltstufe (26) aufweist, die ein auf der Hohlwelle (18) angeordnetes zweites Ritzel (36) und ein auf der Zwischenwelle (18) angeordnetes zweites Zahnrad (38) aufweist, wobei das zweite Ritzel (36) und das zweite Zahnrad (38) miteinander kämmen, wobei eine zweite Kupplungseinrichtung (40) vorgesehen ist, **dadurch gekennzeichnet, dass** mittels der zweiten Kupplungseinrichtung (40) das zweite Ritzel (36) mit der Hohlwelle (18) drehfest koppelbar ist.

2. Antriebseinheit (10) nach Anspruch 1, **dadurch gekennzeichnet, dass** die erste Kupplungseinrichtung (34) einen Freilauf oder einen Freilauf mit einer Klauenkupplung oder eine Lamellenkupplung aufweist.

3. Antriebseinheit (10) nach Anspruch 1, **dadurch gekennzeichnet, dass**, wenn sich das Getriebe (14) in der ersten Schaltstufe (24) befindet, die erste Kupplungseinrichtung (34) geschlossen und die zweite Kupplungseinrichtung (40) geöffnet ist und dass, wenn sich das Getriebe (14) in der zweiten Schaltstufe (26) befindet, die erste Kupplungseinrichtung (34) geöffnet und die zweite Kupplungseinrichtung (40) geschlossen ist.

4. Antriebseinheit (10) nach Anspruch 1, **dadurch gekennzeichnet, dass** das Getriebe (14) eine Parksperrenfunktion aufweist, in der die erste Kupplungseinrichtung (34) und die zweite Kupplungseinrichtung (40) geschlossen sind, so dass die Hohlwelle (18) und die Zwischenwelle (28) relativ zueinander drehfest blockiert sind.

5. Antriebseinheit (10) nach einem der voranstehenden Ansprüche, **dadurch gekennzeichnet, dass** zur Bereitstellung einer Parksperrenfunktion ein Parksperrenrad (48) vorgesehen ist, welches drehfest auf der Zwischenwelle (28) oder dem Differential (16) angeordnet ist und mittels eines betätigbaren Blockierelements, welches mit dem Parksperrenrad (48) in Eingriff bringbar ist, blockierbar ist.

6. Antriebseinheit (10) nach einem der voranstehenden Ansprüche, **dadurch gekennzeichnet, dass** auf der Zwischenwelle (28) ein drittes Ritzel (44) angeordnet ist, welches zum Antrieb des Differentials (16) mit einem Zahnrad (46), welches auf dem Differential (16) angeordnet ist, kämmt.

## Claims

1. Drive unit (10), with an electric machine (12), a transmission (14) and a differential (16), the electric machine (12) being coupled by means of the transmission (14) to the differential (16), with the result that the electric machine (12) can drive the differential (16) via the transmission (14), the electric machine (12) having a rotor shaft (18) which is configured as a hollow shaft (18), the differential (16) being coupled to two axle lateral shafts (20, 22), one of the axle lateral shafts (20, 22) being guided through the hollow shaft (18), the transmission (14) being configured as a 2-gear transmission (14) with an intermediate shaft (28), the transmission (14) having a first shift stage (24) which has a first pinion (30), which is arranged on the hollow shaft (18) and is coupled to the hollow shaft (18) fixedly for conjoint rotation, and a first gearwheel (32) which is arranged on the intermediate shaft (18), the first gearwheel (32) meshing with the first pinion (30) and being mounted rotatably on the intermediate shaft (18), a first clutch device (34) being provided, by means of which the first gearwheel (32) and the intermediate gear (28) can be coupled fixedly for conjoint rotation, the transmission (14) having a second shift stage (26) which has a second pinion (36), which is arranged on the hollow shaft (18), and a second gearwheel (38) which is arranged on the intermediate shaft (18), the second pinion (36) and the second gearwheel (38) meshing with one another, a second clutch device (40) being provided, **characterized in that** the second pinion (36) can be coupled to the hollow shaft (18) fixedly for conjoint rotation by means of the second clutch device (40).

2. Drive unit (10) according to Claim 1, **characterized in that** the first clutch device (34) has a freewheel, or a freewheel with a claw clutch, or a multi-plate clutch.

3. Drive unit (10) according to Claim 1, **characterized in that**, when the transmission (14) is in the first shift stage (24), the first clutch device (34) is closed and the second clutch device (40) is open, and **in that**, when the transmission (14) is in the second shift stage (26), the first clutch device (34) is open and the second clutch device (40) is closed.

4. Drive unit (10) according to Claim 1, **characterized in that** the transmission (14) has a parking lock function, in which the first clutch device (34) and the second clutch device (40) are closed, with the result that the hollow shaft (18) and the intermediate shaft (28) are blocked fixedly for conjoint rotation relative to one another.

5. Drive unit (10) according to one of the preceding claims, **characterized in that**, in order to provide a parking lock function, a parking lock wheel (48) is provided which is arranged on the intermediate shaft (28) or the differential (16) fixedly for conjoint rotation and can be blocked by means of an actuable locking element which can be brought into engagement with the parking lock wheel (48).

6. Drive unit (10) according to one of the preceding claims, **characterized in that** a third pinion (44) is arranged on the intermediate shaft (28), which third pinion (44), in order to drive the differential (16), meshes with a gearwheel (46) which is arranged on the differential (16).

## Revendications

1. Unité d'entraînement (10), avec une machine électrique (12), une boîte de vitesse (14) et un différentiel (16), la machine électrique (12) étant reliée au différentiel (16) au moyen de la boîte de vitesse (14), de sorte que la machine électrique (12) est apte à entraîner le différentiel (16) par l'intermédiaire de la boîte de vitesse (14), la machine électrique (12) présentant un arbre de rotor (18) qui est réalisé sous forme d'arbre creux (18), le différentiel (16) étant relié à deux arbres latéraux d'essieu (20, 22), l'un des arbres latéraux d'essieu (20, 22) étant guidé à travers l'arbre creux (18), la boîte de vitesses (14) étant conçue sous la forme d'une boîte à deux vitesses (14) avec un arbre intermédiaire (28), la boîte de vitesses (14) présentant un premier rapport de vitesse (24) qui présente un premier pignon (30) disposé sur l'arbre creux (18) et relié de manière solidaire en rotation à l'arbre creux (18) et une première roue dentée (32) disposée sur l'arbre intermédiaire (18), la première roue dentée (32) engrenant avec le premier pignon (30) et étant montée de manière rotative sur l'arbre intermédiaire (18), un premier dispositif d'accouplement (34) étant prévu, au moyen duquel la première roue dentée (32) et l'arbre intermédiaire (28) sont aptes à être reliés de manière solidaire en rotation, la boîte de vitesses (14) présentant un deuxième rapport de vitesse (26), qui présente un deuxième pignon (36) disposé sur l'arbre creux (18) et une deuxième roue dentée (38) disposée sur l'arbre intermédiaire (18), le deuxième pignon (36) et la deuxième roue dentée (38) engrenant l'un dans l'autre, un deuxième dispositif d'accouplement (40) étant prévu, **caractérisée en ce que** le deuxième pignon (36) est apte à être relié à l'arbre creux (18) de manière fixe en rotation au moyen du deuxième dispositif d'accouplement (40) .

2. Unité d'entraînement (10) selon la revendication 1, **caractérisée en ce que** le premier dispositif d'accouplement (34) présente une roue libre ou une roue libre avec un accouplement à griffes ou un accouplement à disques.

3. Unité motrice (10) selon la revendication 1, **caractérisée en ce que**, lorsque la boîte de vitesses (14) se trouve dans le premier rapport (24), le premier dispositif d'accouplement (34) est fermé et le deuxième dispositif d'accouplement (40) est ouvert, et **en ce que**, lorsque la boîte de vitesses (14) se trouve dans le deuxième rapport (26), le premier dispositif d'accouplement (34) est ouvert et le deuxième dispositif d'accouplement (40) est fermé.

4. Unité d'entraînement (10) selon la revendication 1, **caractérisée en ce que** la boîte de vitesses (14) présente une fonction de blocage de stationnement dans laquelle le premier dispositif d'accouplement (34) et le deuxième dispositif d'accouplement (40) sont fermés, de sorte que l'arbre creux (18) et l'arbre intermédiaire (28) sont bloqués en rotation l'un par rapport à l'autre.

5. Unité d'entraînement (10) selon l'une des revendications précédentes, **caractérisée en ce que**, pour fournir une fonction de blocage de stationnement, il est prévu une roue de blocage de stationnement (48) qui est disposée de manière solidaire en rotation sur l'arbre intermédiaire (28) ou sur le différentiel (16) et qui est apte à être bloquée au moyen d'un élément de blocage actionnable qui est apte à être mis en prise avec la roue de blocage de stationnement (48).

6. Unité d'entraînement (10) selon l'une des revendications précédentes, **caractérisée en ce qu'**un troisième pignon (44) est disposé sur l'arbre intermédiaire (28), lequel engrène avec une roue dentée (46) disposée sur le différentiel (16) de façon à entraîner le différentiel (16).
